# EUROPEAN PATENT SPECIFICATION

(11) **EP 1 232 129 B1**
(45) Date of publication and mention of the grant of the patent: **05.11.2003**
(21) Application number: 99959342.9
(22) Date of filing: 23.11.1999
(51) Int. Cl.: C05D 3/02, C05G 3/00, B01J 2/16, B01J 2/28

(54) **FERTILISER GRANULATION ADDITIVE COMPRISING MAGNESIUM, CALCIUM SULPHATE AND CARBONATE**
DÜNGEMITTEL-GRANULATIONS-ZUSÄTZE ENTHALTEND MAGNESIUM- UND KALZIUM- KARBONAT UND SULFAT
ADDITIF POUR ENGRAIS COMPRENANT DU SULFATE ET DU CARBONATE DE MAGNESIUM ET DE CALCIUM

(43) Date of publication of application: 21.08.2002
(73) Proprietor: NORSK HYDRO ASA, 0240 Oslo (NO)
(72) Inventor: ODEGAARD, Marit, Rod, N-0362 Oslo (NO); CHYS, Jan, B-9030 Mariakerke (BE); VANMARCKE, LUC, B-9971 Lembeke (BE); STEVENS, Robert, NL-4533 AW Terneuzen (NL); NEVEJANS, Rudy, B-9960 Assenede (BE)
(74) Representative: Wallace, Sheila Jane
(86) International application number: EP9909161
(87) International publication number: WO01038258

(56) References cited:
- EP-A- 0 029 069
- US-A- 5 078 779
- US-A- 5 264 017
- US-A- 5 743 934

## Description

The invention relates to a chemical composition to be used as a granulation additive for a fertilizer composition.

During the last few years in agriculture, the need for water soluble magnesium and the need for sulphur have increased. Magnesium in grass is a requirement to prevent diseases in cattle, due to a Mg-deficiency which is the consequence of the application of manure. Sulphur is a main nutrient which became scarce due to environmental regulations for flue gas desulphurisation, and therefore less deposits on the ground.

A possible answer to fulfil these magnesium and sulphur needs is a fertilizer to which the mineral kieserite has been added. Natural kieserite contains as an average 97% by weight MgSO₄.1H₂O and some 3% by weight impurities. Although the addition of the mineral kieserite to fertilizer leads to an acceptable product, a number of problems are still present. First of all, there are the impurities which can generate a number of problems in the process. Mostly these impurities contain chlorides which in a number of processes have a negative influence either on safety or on environmental issues. Further, it is not always possible to adjust the balance between Mg and S while maintaining the level of water soluble Mg in the composition.

Furthermore, there is a need to have Mg available in a quick soluble composition such as Mg SO₄, and in a slow release composition, such as MgO or Mg CO₃.

It is therefore an object of the invention to provide a chemical composition which can be used as an additive for fertilizer compositions which avoids the above-mentioned difficulties.

This object is obtained by a composition which comprises 35 - 60% by weight of magnesium sulphate, 5 - 35% by weight of calcium sulphate, 10 - 35% by weight of a mixture containing magnesium carbonate and calcium carbonate, up to 5% by weight of water either free or bound as crystal water, the balance being magnesium oxide.

By the use of this composition sulphur is made available as well as magnesium, and the magnesium is present in different forms, either as MgSO₄, which is readily soluble, as MgO, which can be converted into MgNO₃ by reaction with N-containing fertilizer, which is less soluble and as MgCO₃ which is relatively slowly soluble.

The amount of MgSO₄ can be varied between 35 and 60% by weight, dependent upon the ultimate goal of the presence of this product. High amounts of MgSO₄ are required if the coating characteristics of the ultimate product must be increased, and special characteristics are required such as hardness or anti-caking surfaces. In such cases the amount of MgSO₄ must be at least 40% by weight preferably between 50 - 60% by weight and most preferably between 50 - 55% by weight.

Otherwise, if the nutrient characteristics must be improved, it might be preferred to use lower amounts of MgSO₄. In such cases, the MgSO₄ content must be below 55% by weight, preferably between 35 - 45% by weight and most preferably between 40 - 45% by weight.

The amount of Ca SO₄ is between 5 - 35% by weight, but also the amount can be varied dependent upon the required characteristics of the ultimate product. If high nutrition is a requirement, the amount of CaSO₄ must be kept low, preferably at most 20% by weight. Otherwise, if the coating characteristics and mechanical properties of the ultimate product are important, it is recommended to keep the amount of CaSO₄ higher, preferably at least 15% by weight.

The amounts of the carbonates, MgCO₃ and CaCO₃ as such are not very critical, as these products only serve as inert filler material. These compounds can be used to adjust the relationship between the amounts of Mg and S added to the ultimate products.

It is also possible to adjust the amount of MgO present in the chemical composition according to the invention. If the nutrition value of the ultimate product is important, it is preferred to keep the amount of MgO below 5% by weight. This is especially important as MgO has the tendency to react with ammonia-based fertilizers. Otherwise, if the coating characteristics of the final product are important, it is preferred to keep the amount of MgO between 2 - 8% by weight.

The invention also relates to a process for preparing such a chemical composition.

An obvious process for preparing this chemical composition is the so-called wet route, which is based upon a suspension reaction of sulphuric acid with magnesium carbonate. The magnesium sulphate solution obtained has to be dried subsequently by means of any conventional drying process, e.g. spray drying techniques. This process, however, was not very practical because of corrosion during the production of the magnesium sulphate, which was mainly due to the temperature and the sulphuric acid-water-mixture. Moreover, the formation of so-called bittersalt (MgSO₄.7H₂O), makes the product obtained not suitable for all further applications, especially slurry granulation.

It is therefore an object of the invention to provide a process for preparing a chemical composition whereby the above-mentioned problems are avoided.

This process is characterised in that magnesium oxide, magnesium carbonate, and/or calcium carbonate are mixed with sulphuric acid in a fluidised bed reactor, which is driven with air, and the resulting chemical composition is removed from the fluidised bed reactor.

In this way, it was possible to have sufficient reaction between the solids and the sulphuric acid to have a complete reaction and obtain the desired composition.

The main reaction taking place in the fluidised bed reactor is between MgO and H₂SO₄ resulting in the formation of MgSO₄ and water. There is only a limited reaction between the carbonates of calcium and magnesium with sulphuric acid. The reaction between MgO and H₂SO₄ is an exothermic reaction, but the heat generated is insufficient to maintain the reaction temperature at a level which is sufficient to keep the reaction running. For that reason the air used to operate the fluidised bed can be preheated, whereby the reaction speed is increased and the reaction becomes self-sustaining.

Preferably, the air is preheated to a temperature between 110°C and 200°C, more preferably between 120°C and 180°C, and most preferably, the temperature is maintained below 150°C.

In this way, the air temperature is substantially equal to the reaction temperature, so that the reaction as such is not disturbed. In fact, this temperature is a compromise between the heat generated by the reaction and the heat exchange with the environment.

In order to optimise the reaction between H₂SO₄ (a liquid) and the magnesium compounds (MgO or MgCO₃) (solids), it is required to have a specific particle size. This is needed on the one side to have a stable fluidised bed, but otherwise to have sufficient reaction surface, to perform the conversion within acceptable time limits.

For that reason the particle size of magnesium oxide and/or magnesium carbonate is defined as 90% smaller than 100 µm and 40 % smaller than 30 µm.

The reaction time between MgO and H₂SO₄ is preferably longer than 8 minutes, thereby ensuring that together with post-reaction a sufficient conversion of MgO has taken place. More preferably, the reaction time is longer than 10 minutes.

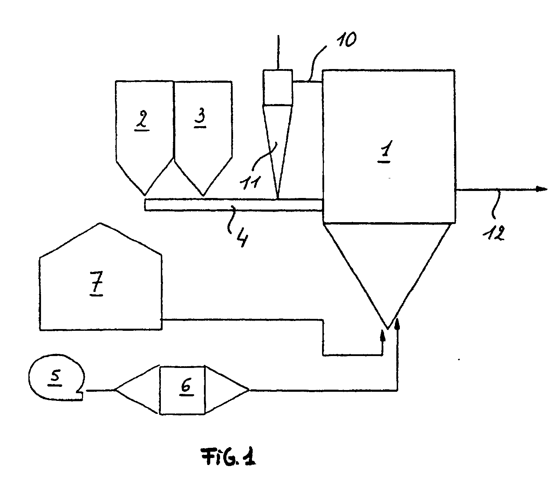

The process will now be described with reference to annexed Figure 1, which is a schematic representation of an installation which can be used for the application of the process according to the invention.

The installation comprises a fluidised bed reactor 1. Two supply hoppers 2 and 3 are provided for MgO and Dolomite respectively, and a transport system 4 such as a screw supplies both these components into the reactor. Air is supplied by a compressor 5 and supplied through a preheating unit 6 to the bottom of the reactor 1. The air is used as atomisation air in a venturi-type configuration, i.e. the air input in the bottom of the reactor is co-axial with the sulphuric add input, and completely surrounding the same. In this way, very finely divided droplets of sulphuric acid are introduced into the reactor.

A container of sulphuric acid can be connected to the bottom part of the reactor 1, so that it can be supplied together with the preheated air. In the upper part of the reactor, an outlet 10 has been provided which ends in the top of a cyclone device 11, the outlet of which being connected to the transport system 4. Another outlet 12 is used for removing product from the reactor. The top of the cyclone is connected to a scrubber (not shown) whereby air can be removed from the reactor 1 and the cyclone device 11.

The spouted air should be supplied in such amount, that no solids can fall into the under-casing (minimum velocity). The maximum velocity is given by the fact that still a certain bed height is necessary for reaction. Because of the fluidised bed of solids, no acid can come into contact with the fluidised bed reactor walls. The bed acts as a protector against corrosion. Also when the recycle is too large (circulating bed), too much cooling may occur which might not be in optimal equilibrium with the heat of reaction and further conversion of the reactants. The minimum amount of inert that should be present should divide all liquid equally in the mixture and should promote reaction-water transfer into the gas, out of the reactor. This is in order to prevent negative effects of the water present, like corrosion, cooling, and agglomeration. The maximum of this 'inert' present is given by the conversion rate of the base and the heat of reaction that occurs which can be used for upgrading the inert.

The central unit is the Fluidised Bed reactor. This reactor can have a one or multi spout reactor, depending on the required capacity. Spout air (fluidisation) is supplied via venturis forming the bottom. In the centre of these venturis, liquid two-phase nozzles are mounted centrally. One to all venturis can be equipped with such a nozzle. Acid is supplied by a pump from a tank to these nozzles. The acid should be atomised by gas (preferably air or a base gas). Depending on the type of nozzle the pressure to spray the add can vary. End product can be withdrawn from the bed centrally from the bottom. Any other place in the bed is also possible (e.g. other place at bottom or side walls). Product withdrawal from the recirculation loop is also possible. The materials in the spouted (fluidised) bed can circulate over the bed and a dedusting unit (filter or cyclone). The product can be recycled into the bed either via a mechanical (screw) or pneumatic device. A rotary valve may be necessary. Solid product (base and /or inert) can be supplied at several places in the bed. The solid base material should preferably be supplied as close as possible to the acid supply. Both products can be fed into the bed either mixed or individually. Supply can be done pneumatically or via mechanical dosing equipment. Rotary valves may be necessary to prevent leaking.

The end product should be given residence time in order to promote post reaction to obtain a good product quality. Residence time can be given in a normal bin or in more sophisticated devices like e.g. temperature controlled devices and/or degassing devices. Product should be kept in movement in order to prevent blocking of the system due to post reaction effects. After post reaction (a part of) the product can be brought into the right particle size distribution. Mechanical or pneumatic devices are possible tools to achieve a classification. A combination of classification and cooling might be a possibility.

The end product should be directly compatible with the Hydro Fluidised Bed Granulation process. The compatibility can be achieved anywhere in the fluidised bed granulation. Both front end (slurry granulation) and back end (recycle granulation, coating end product) supply are possibilities. The end product is suitable in the same way with other fertilizer granulation processes.

An example of the liquid - solid reaction can be the conversion of magnesium oxide with sulphuric acid into the secondary and micro-nutrient magnesium sulphate. As inert dolomite (equimolar mixture of calcium and magnesium carbonate) is used, the heat of reaction is used for the evaporation of water and to initialise the conversion of dolomite into magnesium sulphate and calcium sulphate. The acid is supplied in excess of the magnesium oxide. However, not all dolomite should be converted, because of its function as reaction medium for heat and mass transfer. The acid is supplied via a two-phase nozzle which takes care of the formation of fine droplets. The atomisation air is cold in order to prevent corrosion due to warm sulphuric acid.

The invention also relates to a fertilizer which is characterised in that prior to or during granulation, the fertilizer has been mixed with the chemical composition according to the invention.

In case the chemical composition described above is mixed with a fertilizer composition prior to or during the granulation thereof, it is possible to mix other chemical substances with the chemical composition in order to add other useful compounds to the fertilizer composition. A requirement is that there is no chemical reaction between the fertilizer, the chemical composition and the added chemical substance and that the added chemical substance is stable enough to be submitted to the granulation process.

Good examples of such chemical substances are micro-nutrients, especially oxides, hydroxides or carbonates of metals such as Zinc, Manganese or Copper although also other stable substances can be added as well, such as primary nutrients. Examples of such primary nutrients are phosphate rock, such as for example fluorapatite, ammonium phosphates, such as di-ammonium phosphate or mono-ammonium phosphate, and potassium salts, such as potassium chloride or potassium sulphate.

Further, the invention also relates to fertilizer granules which are characterised in that the granules are coated with the chemical composition according to the invention.

Further, the invention relates to such a fertilizer in which the coating is filled with one or more other chemical substances selected from the group consisting of primary and secondary nutrients, micro-nutrients, nitrification inhibitors, slow release controlling agents, biostimulants, pesticides, herbicides, fungicides, living organisms, vitamins, marine based products, amino acids and metal chelates of Zn, Mn, Fe or Cu.

In case the coating is applied at room temperature, any other chemical composition can be added to the coating provided it will not react with the coating composition and/or the fertilizers, which means that practically any inert composition can be added. In case the coating is not applied at room temperature, but at more elevated temperature, care must be taken that no reaction between the coating and/or the fertilizer and the added chemical composition will take place.

Examples of such chemical substances are:

### Nutrients

- Primary nutrient(s), which in common terminology is N, P and K, the nutrient(s) may be, phosphate rock, such as for example fluorapatite, ammonium phosphates, such as for example di-ammonium phosphate and monoammoniumphosphate, potassium salts, such as for example potassium chloride and potassium sulphate.
- Secondary nutrient(s), which in common terminology is S, Mg and Ca and may be for example in addition to the compounds described (magnesium sulphate, magnesium oxide, magnesium carbonate, calcium carbonate, calcium oxide, calcium sulphate, dolomite) elemental sulphur and sodium chloride.
- Micro-nutrient(s), which in common terminology is compounds of Zn, Mn, Cu, Co, Se, Mo, Si, Fe and B, and may be the oxide, sulphate, chloride or carbonate salts or other forms of the mentioned elements, such as for example, zinc oxide, zinc sulphate, zinc carbonate, manganese oxide, manganese sulphate, manganese carbonate, manganese chloride, copper oxide, copper sulphate, cobalt sulphate, cobalt carbonate, cobalt hydroxide, sodium selenate, ammonium molybdate, sodium molybdate, sodium silicate, ferric oxides (for example hematite, magnetite), ferric carbonate (siderite), ferric sulphide, ferrous ammonium phosphate, ferrous ammonium sulphate, orthoboric acid, disodium tetraborate, disodium octaborate tetrahydrate, calcined ulexite, metaboric acid, tetraboric acid, boric oxide, calcium metaborate, calcium tetraborate, borax decahydrate and the chelated forms of the elements Zn, Mn, Cu, Fe, the chelating agent being for example EDDHSA, EDDHAS, DTPA, LPCA, HEDTA, natural chelators; gluconates.

Since the technique allows for coating of prills or granules under very mild conditions, also many other categories of additives can be fixed to the fertilizer without risk of the additives being deteriorated such as for example:

### Natural products

- Natural organic chemicals, e.g. biopolymers of plant or animal origin, natural fungicidal, herbicidal or insecticidal compounds as for example: Natural plant growth regulators, sugars, fatty acids, polysaccharides such as alginate or chitosan, natural resins, natural complexing agents such as carboxylic acids, amino acids, humic acids, phenols.
- Organic materials of compost, fermentation, plant or animal origin such as extracts such as for example algal extracts, digests, meals, by-products from plant material or animal processing.
- Live micro-organisms or microbial spores of fungal or bacterial origin

### Synthetic compounds or semi-synthetic mixtures

- Crop protection agents such as Quaternary ammonium compounds, Tertiary sulfonium compounds, carbamates, aromatic comounds, pyrethroids, pheromones, organophosphates, amino-compounds, polyaminocompounds.
- Synthetic chelators, ion exchange agents, and polymers such as iminocarboxylic acids, polyamines, polyacrylates, polyols, polycarboxylic acids, and polyamino acids.
- Nitrification inhibitors as for example 2-chloro-6-(trichloromethryl)pyridine, DCD (dicyandiamide), 1-carbamoyl-3-methylpyrazole, 3MP (3-methylpyrazole).

### Slow release agent(s) / polymer(s)

Methylene urea, starch, and starch derivatives (such as for example potato starch), cellulose and cellulose derivatives (such as for example methylcellulose, ethyl cellulose, cellulose acetate, carboxymethyl cellulose, cellulose esters), guar (such as for example phosphorylated guar).

It should be mentioned that the listing of the groups of substances and examples in the given groups is illustrative, and not restrictive, with respect to the group of substances that can be added to the coating.

The invention also relates to a process for preparing such fertilizer granules. In the process the following composition is fed to a coating device:
1. fertilizer granules;
2. a chemical composition according to the invention;
3. an amount of water, and optionally;
4. amounts of one or more chemical substances selected from the group consisting of primary and secondary nutrients, micro-nutrients, nitrification inhibitors, slow release controlling agents, biostimulants, pesticides, herbicides, fungicides, living organisms, amino acids, vitamins, marine-based products and metal chelates, and the coated fertilizer granules are removed from the coating device.

The invention will now further be explained by means of the following examples.

### Example 1

In an apparatus as described above the following chemical components, were used MgO obtained by caustic calcination of Magnesium with a specific surface of 10 to 15 m²/gr. The average particle size was 20 µm (Median diameter), with 99% by weight smaller than 90 µm.

MgCO₃ and CaCO₃ as mixed dolomite having an equimolar composition of Mg and Ca. The particle size was defined as being 90% by weight smaller than 100 µm and the amount of impurities was less than 4% by weight.

Sulphuric acid was used in a commercial grade of 90%.

The process conditions were:

| | | |
|---|---|---|
| Spouted air | flow | 500 Nm³/hr |
| | pressure | 0,13 barg |
| | temperature | 140° C |

Atomisation air, i.e. air to be used to break the flow of sulphuric acid into small droplets.

| | |
|---|---|
| flow | 45 Nm³/ hr |
| pressure | 4,0 barg |
| temperature | 10°C |

Raw materials input flow.

| | |
|---|---|
| MgO | 75 kg / hr |
| Dolomite | 300 kg / hr |
| Sulphuric acid | 190 l / hr (pressure of 1,4 barg) |

Fluidised bed: the temperature in the top of the reactor was 130°C.

| | | |
|---|---|---|
| Output flow | flow | 550 kg / hr |
| | temperature | 74°C |
| | recycling + input (in 4) | 1300 kg / hr |
| | temperature at input | 74°C |

In a number of successive tests, the following compositions have been obtained.

**Table 1**

| | MgO | dolomite | MgSO4 | CaSO4 | Balance |
|---|---|---|---|---|---|
| 1 | 4.4 | 46.3 | 35.2 | 12.9 | 1.3 |
| 2 | 6.7 | 37.8 | 35.6 | 14.8 | 5.0 |
| 3 | 4.7 | 24 | 42.1 | 15.8 | 13.4 |
| 4 | 6.8 | 22 | 43.1 | 13.2 | 14.9 |
| 5 | 9 | 28.5 | 41.3 | 10.5 | 10.6 |
| 6 | 8.1 | 18.5 | 47.1 | 12.3 | 13.9 |
| 7 | 2.1 | 16.2 | 52.3 | 15.8 | 13.6 |
| 8 | 7.7 | 19.6 | 44.6 | 14.2 | 13.9 |
| 9 | 4.3 | 13.1 | 50.7 | 21.5 | 10.5 |
| 10 | 6.7 | 30.5 | 37.2 | 14.4 | 11.2 |
| 11 | 7.8 | 19.4 | 39.5 | 16.9 | 16.4 |
| 12 | 4.3 | 32.1 | 35.4 | 10.8 | 17.4 |
| 13 | 3.6 | 30 | 38.9 | 8.7 | 18.9 |
| 14 | 6.5 | 25.1 | 39.5 | 10.6 | 18.3 |
| 15 | 16.3 | 21.3 | 28.2 | 12.5 | 21.7 |
| 16 | 6.5 | 32.8 | 35.7 | 7.9 | 17.1 |
| 17 | 6 | 26.6 | 38.7 | 8.7 | 20.1 |
| 18 | 3.4 | 18.6 | 42.1 | 19.2 | 16.7 |
| 19 | 1.2 | 19.2 | 46.1 | 18.8 | 14.7 |
| 20 | 5.2 | 16.8 | 41.8 | 18.9 | 17.3 |
| 21 | 5.1 | 25.7 | 36.6 | 16.7 | 16.0 |
| 22 | 1.4 | 39 | 30.8 | 13.6 | 15.2 |
| 23 | 2.6 | 34.5 | 36.2 | 12.7 | 14.0 |
| 24 | 4.5 | 31.5 | 37.7 | 10.7 | 15.5 |
| 25 | 4.5 | 31.5 | 37.7 | 10.7 | 15.5 |
| 26 | 6.7 | 19.4 | 35.9 | 15.6 | 22.4 |
| 27 | 4.3 | 28.6 | 37.5 | 12.1 | 17.5 |
| 28 | 0 | 12.9 | 53.4 | 21.2 | 12.5 |
| 29 | 3 | 23.5 | 46.3 | 11.2 | 15.9 |
| 30 | 3.7 | 21.7 | 45.5 | 12.5 | 16.6 |
| 31 | 6.5 | 19.4 | 43.2 | 10.5 | 20.5 |
| 32 | 1.7 | 26.1 | 44.6 | 11.6 | 16.1 |
| 33 | 2.2 | 22.1 | 47.8 | 11.4 | 16.6 |
| 34 | 0 | 23.9 | 48.1 | 12.2 | 15.9 |
| 35 | 1.1 | 15.7 | 54 | 7.8 | 21.3 |
| 36 | 5.3 | 8.6 | 46.4 | 31.4 | 8.4 |
| 37 | 3.8 | 27.7 | 41.2 | 10 | 17.2 |
| 38 | 7.1 | 16.2 | 45 | 9.4 | 22.2 |
| 39 | 3.5 | 26.5 | 44.6 | 7.8 | 17.6 |
| 40 | 4.8 | 27.5 | 39.3 | 11.7 | 16.7 |
| 41 | 8.1 | 16.3 | 42.2 | 10.6 | 22.8 |
| 42 | 0.7 | 23 | 46.3 | 9.9 | 20.1 |
| 43 | 1.1 | 26.7 | 42.8 | 6.7 | 22.7 |
| 44 | 8.1 | 15.6 | 44.9 | 7.1 | 24.2 |
| 45 | 0.8 | 27.9 | 49 | 6 | 16.3 |
| 46 | 5.3 | 28.2 | 40.5 | 8.6 | 17.5 |
| 47 | 4.2 | 25.5 | 46.4 | 6 | 17.9 |
| 48 | 6.6 | 24.8 | 39.9 | 9.7 | 19.0 |
| 49 | 1.3 | 29 | 45.5 | 9.1 | 15.1 |
| 50 | 5.7 | 25.9 | 40.1 | 10.2 | 18.1 |
| 51 | 4.4 | 27.9 | 39.6 | 11.1 | 17.0 |
| 52 | 8.3 | 10.4 | 44.2 | 11.7 | 25.4 |
| 53 | 3.8 | 27 | 39.8 | 5.2 | 24.2 |
| 54 | 5.4 | 23.1 | 43.8 | 8.5 | 19.2 |
| 55 | 5.8 | 15.2 | 51.2 | 6.9 | 20.8 |
| 56 | 0.7 | 23.4 | 54.8 | 3.6 | 17.5 |
| 57 | 3.9 | 19.5 | 49.9 | 7.1 | 19.5 |
| 58 | 4.4 | 23 | 46.8 | 7.1 | 18.6 |
| 59 | 4.7 | 23.3 | 50.1 | 4.3 | 17.6 |
| 60 | 3.8 | 24 | 49.8 | 6.3 | 16.1 |
| 61 | 4.9 | 14 | 47.1 | 9.3 | 24.6 |
| 62 | 0 | 23.8 | 45.6 | 10 | 20.6 |
| 63 | 5.5 | 15 | 44.2 | 15.3 | 20.1 |
| 64 | 5 | 20.8 | 45 | 10.6 | 18.6 |
| 65 | 5.9 | 11.7 | 50.5 | 8.8 | 23.0 |
| 66 | 1.2 | 25.3 | 47.8 | 8.3 | 17.4 |
| 67 | 9.5 | 20.4 | 36.8 | 3.7 | 29.7 |
| 68 | 0.8 | 15.8 | 52.7 | 13.9 | 16.7 |
| 69 | 4.7 | 19.7 | 44.2 | 9.9 | 21.5 |
| 70 | 1.8 | 9.2 | 53.1 | 17.6 | 18.3 |
| 71 | 3.4 | 17.5 | 45 | 16.4 | 17.7 |
| 72 | 0 | 10.8 | 50.9 | 34.1 | 4.1 |
| 73 | 0 | 24.2 | 42.7 | 24.1 | 9 |
| 74 | 0 | 23.5 | 42.8 | 22.3 | 11.4 |
| The balance consists of = impurities raw materials, moisture and insoluble S-containing compounds. | | | | | |

### Example 2

A 150 kg, 97% melt is made from ammonium nitrate (AN), chemical composition 15 of example 1, additional dolomite, magnesium nitrate and a few ppm granulation additive at 160°C. This melt is sprayed on seed material in a batch fluidised bed granulator at a bed temperature of approximately 130°C. After granulation the product is cooled to 35°C. The desired amount of magnesium sulphate in the end product determines the amount of AN and dolomite which is added. In the case of urea the same holds, only 120 kg of 96% melt is applied at 135°C and granulated at 108°C.

**Table 2**

| | **Test 1** | **Test 2** |
|---|---|---|
| **Moisture %** | 0.46 | 0.43 |
| **SO**_{**3**}**%** | 9.93 | 10.27 |
| **MgO % total / water soluble** | 11.43 / 5.90 | 11.27 / 5.87 |
| **CaO % total / water soluble** | 10.73 / 2.83 | 10.8 / 2.94 |
| **N %** | 19,21 | 19,14 |
| **Abrasion (g/kg) / Dust** | 0.3 | 0.3 |
| **Crushing strength (kg)** | 9.4 | 9.3 |
| **Density** | 2.021 | 2.019 |
| **Apparent Caking** | free flowing | free flowing |

In table 2 the results of two different tests according to the above-described procedure are shown. From table 2 it becomes clear that the product obtained is sufficiently stable in composition and characteristics and the process is stable in time and can easily be reproduced.

### Example 3

In another test in which a fertilizer composition was made in the same way as described is example 2, the use of the mineral kieserite and chemical composition no. 3 have been compared. The results are shown in table 3.

**Table 3**

| | **Mineral** | **Chemical Comp. No. 3** |
|---|---|---|
| **Moisture %** | 0.33 | 0.48 |
| **N %** | 20.1 | 19.7 |
| **SO**_{**3**} **%** | 10.25 | 10.2 |
| **MgO % total / water soluble** | 10.06 / 6.80 | 10.86 / 5.45 |
| **CaO % total / water soluble** | 0 | 2.43 |
| **Apparent density** | 1.933 | 1.997 |
| **Abrasion (g/kg)** | 2.2 | 0.5 |
| **Crushing strength (kg)** | 7 | 8.8 |

From this test, it becomes clear that the fertilizer composition obtained has an improved crushing strength and has a better resistance against abrasion.

### Example 4

In this example two fertilizer compositions with the chemical composition no. 36 are compared. In example 4A 25% of the chemical composition has been used, and in example 4B 15%.

**Table 4**

| **Synthetic Kieserite no. 36** | **4A** | **4B** |
|---|---|---|
| **Moisture %** | 0.59 | 1.00 |
| **SO**_{**3**} **% gray** | 15.52 | 9.84 |
| **MgO % total / water soluble** | 10.32 / 6.87 | 9.20/5.97 |
| **CaO % total / water soluble** | 7.63 / 2.55 | 7.42 / 2.15 |
| **N %** | 19.32 | 21.6 |
| **Abrasion (g/kg) Dust** | 1.9 | 0.9 |
| **Crushing strength (kg)** | 8.9 | 8.9 |
| **Apparent density** | 2.000 | 1.935 |
| **Bag test** | free flowing | free flowing |

It becomes clear by modifying the amount of chemical composition, the amount of Mg and S can be influenced, thereby adjusting the composition of the fertilizer.

### Example 5

In this example, two urea products have been made by using synthetic kieserite no. 18 and 22 and the characteristics thereof are compared with urea products using mineral kieserite and the standard urea products.

**Table 5**

| **Product: Analysis** | **Chemical Composition 18** | **Chemical Composition 22** | **Mineral Kieserite** | **Reference Urea** |
|---|---|---|---|---|
| **Moisture %** | 0.65 | 0.52 | 0.61 | 0.2 |
| **N-total (%)** | 32.11 | 31.24 | 31.42 | 46.2 |
| **pH 10%** | 9.3 | 9.1 | 8.47 | 9.2 |
| **Crushing Strength (kg)** | 7.1 | 8.1 | 4.8 | 4.1 |
| **Apparent density** | 1.56 | 1.57 | 1.41 | 1.28 |
| **Abrasion dust (g/kg)** | 0.6 | 0.2 | 1.1 | 0.1 |

Also, in this test it has been proved that the crushing strength has been improved, whereas the abrasion has been diminished.

### Example 6

In a number of tests, the chemical composition described above and as made in example 1 was used as a coating for fertilizer already shaped as granules. Therefore, the chemical composition was fed to a coating device together with fertilizer granules and some water. It was found to be possible to add other chemical substances to the coating thereby improving the composition of the fertilizer granules.

In two practical tests calcium ammonium nitrate granules (CAN) were coated with chemical compositions no. 36 and no. 22 by supplying the chemical compositions together with the CAN-granules to a coating device and supplying sufficient amounts of water, necessary to saturate the anhydrite gypsum to the hydrate form.

The obtained granules had the following characteristics:

**Table 6**

| | **Chemical composition no. 36** | **Chemical composition no. 22** |
|---|---|---|
| **Moisture %** | 1.77 | 1.40 |
| **SO**_{**3**} **%** | 8.96 | 9.36 |
| **MgO %** | 8.55 | 8.84 |
| **N %** | 22.14 | 21.40 |
| **Abrasion g/kg Dust** | 1.7 | 0.9 |
| **Crushing strength** | 4.9 | 5.4 |

From these tests, it becomes clear that a fertilizer granule was obtained having satisfactory mechanical characteristics to be used in standard circumstances. An important advantage of this type of fertilizer granules was that other chemical substances could easily be mixed with the chemical composition used as the coating.

### Example 7

In a small scale coating drum (Electrolux) 300 to 400 grams of urea prills are coated with 2% or 4% zinc oxide. The urea prills are obtained from production (urea 6, HAS). The zinc oxide is of analytical quality (99%, Baker) with a very fine particle size. The product have been tested on abrasion properties (PQR abrasion test (2)), i.e. it was checked which amount of coating comes off via dust formation.

Two tests, both based on 2 and 4% of Zinc Oxide (1.6 and 3.2% Zn) have been performed on UF80 coated prills and non-coated prills. The first test used UF80 free prills from production, before screening. In this case, the UF coating was applied on cold prills in a small coating drum before coating with zinc oxide. As reference, the non-coated prills were coated with zinc oxide. The second tests used prills from production after screening. The non-coated prills were taken before the UF-coating drum, the coated prills just after. Both products were cooled until room temperature before being coated with zinc oxide.

**Table 7**

| Abrasion of non-screened prills with and without UF coating with 2 or 4% ZnO | | |
|---|---|---|
| **Product (abrasion: mg/kg)** | **UF-coating: 0.3% pilot scale)** | **no UF-coating** |
| **0% ZnO** | 948 | 2.099 |
| **2% ZnO** | 2.147 | 497 |
| **4% ZnO** | 1.249 | 1.124 |

**Table 8**

| Abrasion of screened prills with and without UF-coating with 2 or 4% ZnO | | |
|---|---|---|
| **Product (abrasion: mg/kg)** | **UF-coating: 0.2% (production)** | **no UF-coating** |
| **0% ZnO** | - | 550 |
| **2% ZnO** | 650 | 525 |
| **4% ZnO** | 1.300 | 800 |

As can be seen from the results in table 7, the randomness of the product quality of the prills, which had not been screened to a defined particle size distribution, has a strong influence on the dust formation of the end product. However, the application of a zinc oxide coating (with or without "glue") does not significantly change the dust formation.

It is clear from the results in table 8 that a UF-coating is not necessary, having in mind that the dust formation of the prills already can vary between 500 and 1200 mg/kg. It can be concluded that the zinc oxide itself already shows enough adhesion to be prevented from being blown off.

## Claims

1. Chemical composition for use as an additive for a fertilizer composition,
**characterized in that** it comprises 35 - 60 % by weight of magnesium sulphate, 5 - 35 % by weight of calcium sulphate, 10 - 35 % by weight of a mixture containing magnesium carbonate and calcium carbonate, up to 5 % by weight of water, either free or bound as crystal water, the balance being magnesium oxide.

2. Chemical composition according to claim 1,
**characterized in that** it comprises at least 40 % by weight of magnesium sulphate.

3. Chemical composition according to claim 1 or claim 2,
**characterized in that** it comprises at most 55 % by weight of magnesium sulphate.

4. Chemical composition according to claim 1,
**characterized in that** it comprises 35 - 45 % by weight of magnesium sulphate.

5. Chemical composition according to claim 1,
**characterized in that** it comprises 40 - 45 % by weight of magnesium sulphate.

6. Chemical composition according to claim 1,
**characterized in that** it comprises 50 - 60 % by weight of magnesium sulphate.

7. Chemical composition according to claim 1,
**characterized in that** it comprises 50 - 55 % by weight of magnesium sulphate.

8. Chemical composition according to any one of the preceding claims,
**characterized in that** it contains at most 30 % by weight of calcium sulphate.

9. Chemical composition according to any one of claims 1 to 8,
**characterized in that** it contains at least 15 % by weight of calcium sulphate.

10. Chemical composition according to any one of the preceding claims,
**characterized in that** it contains between 2 and 8 % by weight of magnesium oxide.

11. Chemical composition according to claim 10,
**characterized in that** it contains less than 5 % by weight magnesium oxide.

12. A process for preparing a chemical composition containing 35 - 60 % by weight of magnesium sulphate, 5 - 35 % by weight of calcium sulphate, 10 - 35 % by weight of a mixture containing magnesium carbonate and calcium carbonate and the balance being magnesium oxide,
**characterized in that** magnesium oxide, magnesium carbonate and/or calcium carbonate are mixed with sulphuric acid in a fluidised bed reactor, which is driven with air, and the resulting chemical composition is removed from the fluidised bed reactor.

13. A process according to claim 12,
**characterized in that** the magnesium carbonate is dolomite.

14. A process according to claim 12 or claim 13,
**characterized in that** the magnesium oxide has a defined crystal struc ture.

15. A process according to any one of claims 12 to 14,
**characterized in that** the air is preheated.

16. A process according to any one of claims 12 to 15,
**characterized in that** the bed temperature is maintained at a temperature between 110 and 200°C.

17. A process according to claim 16,
**characterized in that** the bed temperature is at least 120°C.

18. A process according to claim 16 or claim 17,
**characterized in that** the bed temperature is at most 180°C.

19. A process according to claim 18,
**characterized in that** the bed temperature is at most 150°C.

20. A process according to any one of claims 12 to 19,
**characterized in that** the particle size of magnesium oxide and / or magnesium carbonate is defined as 90% smaller than 100 µm and 40% smaller than 30 µm.

21. A process according to any one of claims 12 to 20,
**characterized in that** the reaction time is longer than 8 minutes.

22. A process according to any one of claims 12 to 21,
**characterized in that** the reaction time is longer than 10 minutes.

23. A process according to any one of claims 12 to 22,
**characterized in that** a micro-nutrient is mixed with a chemical composition according to any one of claims 1 to 11 in the fluidised bed.

24. Fertilizer,
**characterized in that** prior to or during granulation, the fertilizer has been mixed with a chemical composition according to any one of claims 1 to 11.

25. Fertilizer according to claim 24,
**characterized in that** prior to or during granulation the fertilizer has been mixed with a chemical composition and other chemical substances.

26. Fertilizer according to claim 25,
**characterized in that** the other chemical substances are micro-nutrients.

27. Fertilizer granules,
**characterized in that** the granules are coated with a chemical composition according to any one of claims 1 to 11.

28. Fertilizer granules according to claim 27,
**characterized in that** the coating is filled with other chemical compositions selected from the group consisting of primary and secondary nutrients, micro-nutrients, nitrification inhibitors, slow release controlling agents, biostimulants, pesticides, herbicides, fungicides, living organisms, vitamins, amino acids, marine based additives and metal chelates.

29. A process for preparing fertilizer granules according to claim 27 or claim 28,
**characterized in that** a mixture is fed to a coating device which mixture comprises;
1. fertilizer granules;
2. a chemical composition according to any one of claims 1 to 11;
3. an amount of water, and optionally;
4. amounts of products selected from the group consisting of primary and secondary nutrients, micro-nutrients, nitrification inhibitors, slow release controlling agents, biostimulants, pesticides, herbicides, fungicides, living organisms, vitamins, amino acids, marine based additives and metal chelates,
and that the coated fertilizer granules are removed from the coating device.

## Patentansprüche

1. Chemische Zusammensetzung zur Verwendung als Zusatzstoff für eine Düngemittelzusammensetzung, **dadurch gekennzeichnet, dass** sie 35-60 Gew.-% Magnesiumsulfat, 5-35 Gew.-% Calciumsulfat, 10-35 Gew.-% eines Gemischs aus Magnesiumcarbonat und Calciumcarbonat, bis zu 5 Gew.-% Wasser, entweder ungebunden oder gebunden als Kristallwasser, umfasst, wobei der Rest Magnesiumoxid ist.

2. Chemische Zusammensetzung nach Anspruch 1, **dadurch gekennzeichnet, dass** sie wenigstens 40 Gew.-% Magnesiumsulfat umfasst.

3. Chemische Zusammensetzung nach Anspruch 1 oder Anspruch 2, **dadurch gekennzeichnet, dass** sie höchstens 55 Gew.-% Magnesiumsulfat umfasst.

4. Chemische Zusammensetzung nach Anspruch 1, **dadurch gekennzeichnet, dass** sie 35-45 Gew.-% Magnesiumsulfat umfasst.

5. Chemische Zusammensetzung nach Anspruch 1, **dadurch gekennzeichnet, dass** sie 40-45 Gew.-% Magnesiumsulfat umfasst.

6. Chemische Zusammensetzung nach Anspruch 1, **dadurch gekennzeichnet, dass** sie 50-60 Gew.-% Magnesiumsulfat umfasst.

7. Chemische Zusammensetzung nach Anspruch 1, **dadurch gekennzeichnet, dass** sie 50-55 Gew.-% Magnesiumsulfat umfasst.

8. Chemische Zusammensetzung nach einem der vorherigen Ansprüche, **dadurch gekennzeichnet, dass** sie höchstens 30 Gew.-% Calciumsulfat enthält.

9. Chemische Zusammensetzung nach einem der Ansprüche 1 bis 8, **dadurch gekennzeichnet, dass** sie wenigstens 15 Gew.-% Calciumsulfat enthält.

10. Chemische Zusammensetzung nach einem der vorherigen Ansprüche, **dadurch gekennzeichnet, dass** sie zwischen 2 und 8 Gew.-% Magnesiumoxid enthält.

11. Chemische Zusammensetzung nach Anspruch 10, **dadurch gekennzeichnet, dass** sie weniger als 5 Gew.-% Magnesiumoxid enthält.

12. Verfahren zur Herstellung einer chemischen Zusammensetzung, die 35-60 Gew.-% Magnesiumsulfat, 5-35 Gew.-% Calciumsulfat, 10-35 Gew.-% eines Gemischs aus Magnesiumcarbonat und Calciumcarbonat enthält, wobei der Rest Magnesiumoxid ist, **dadurch gekennzeichnet, dass** Magnesiumoxid, Magnesiumcarbonat und/oder Calciumcarbonat mit Schwefelsäure in einem Wirbelbettreaktor vermischt werden, der mit Luft betrieben wird, und die resultierende chemische Zusammensetzung aus dem Wirbelbettreaktor herausgenommen wird.

13. Verfahren nach Anspruch 12, **dadurch gekennzeichnet, dass** das Magnesiumcarbonat Dolomit ist.

14. Verfahren nach Anspruch 12 oder Anspruch 13, **dadurch gekennzeichnet, dass** das Magnesiumoxid eine definierte Kristallstruktur hat.

15. Verfahren nach einem der Ansprüche 12 bis 14, **dadurch gekennzeichnet, dass** die Luft vorgewärmt wird.

16. Verfahren nach einem der Ansprüche 12 bis 15, **dadurch gekennzeichnet, dass** die Betttemperatur auf einer Temperatur zwischen 110 und 200°C gehalten wird.

17. Verfahren nach Anspruch 16, **dadurch gekennzeichnet, dass** die Betttemperatur wenigstens 120°C beträgt.

18. Verfahren nach Anspruch 16 oder 17, **dadurch gekennzeichnet, dass** die Betttemperatur höchstens 180°C beträgt.

19. Verfahren nach Anspruch 18, **dadurch gekennzeichnet, dass** die Betttemperatur höchstens 150°C beträgt.

20. Verfahren nach einem der Ansprüche 12 bis 19, **dadurch gekennzeichnet, dass** die Partikelgröße von Magnesiumoxid und/oder Magnesiumcarbonat als 90 % kleiner als 100 µm und 40 % kleiner als 30 µm definiert ist.

21. Verfahren nach einem der Ansprüche 12 bis 20, **dadurch gekennzeichnet, dass** die Reaktionszeit länger als 8 Minuten ist.

22. Verfahren nach einem der Ansprüche 12 bis 21, **dadurch gekennzeichnet, dass** die Reaktionszeit länger als 10 Minuten ist.

23. Verfahren nach einem der Ansprüche 12 bis 22, **dadurch gekennzeichnet, dass** ein Mikronährstoff mit einer chemischen Zusammensetzung nach einem der Ansprüche 1 bis 11 in dem Fließbett vermischt wird.

24. Düngemittel, das **dadurch gekennzeichnet ist, dass** es vor oder während der Granulierung mit einer chemischen Zusammensetzung nach einem der Ansprüche 1 bis 11 vermischt wird.

25. Düngemittel nach Anspruch 24, **dadurch gekennzeichnet, dass** es vor oder während der Granulierung mit einer chemischen Zusammensetzung und anderen chemischen Substanzen vermischt wird.

26. Düngemittel nach Anspruch 25, **dadurch gekennzeichnet, dass** die anderen chemischen Substanzen Mikronährstoffe sind.

27. Düngemittelkörnchen, die **dadurch gekennzeichnet sind, dass** sie mit einer chemischen Zusammensetzung nach einem der Ansprüche 1 bis 11 beschichtet sind.

28. Düngemittelkörnchen nach Anspruch 27, **dadurch gekennzeichnet, dass** die Beschichtung mit anderen chemischen Zusammensetzungen gefüllt ist, die ausgewählt sind aus der Gruppe bestehend aus Primär- und Sekundärnährstoffen, Mikronährstoffen, Nitrifikationsinhibitoren, Mitteln zur Steuerung einer langsamen Freisetzung, Biostimulanzien, Pestiziden, Herbiziden, Fungiziden, lebenden Organismen, Vitaminen, Aminosäuren, marinen Zusatzstoffen und Metallchelaten.

29. Verfahren zur Herstellung von Düngemittelkörnchen nach Anspruch 27 oder Anspruch 28, **dadurch gekennzeichnet, dass** ein Gemisch einer Beschichtungsvorrichtung zugeführt wird, wobei das Gemisch Folgendes umfasst:
1. Düngemittelkörnchen;
2. eine chemische Zusammensetzung nach einem der Ansprüche 1 bis 11;
3. eine Wassermenge und bei Bedarf:
4. Mengen von Produkten, die ausgewählt sind aus der Gruppe bestehend aus Primär- und Sekundärnährstoffen, Mikronährstoffen, Nitrifikationsinhibitoren, Mitteln zur Steuerung einer langsamen Freisetzung, Biostimulanzien, Pestiziden, Herbiziden, Fungiziden, lebenden Organismen, Vitaminen, Aminosäuren, marinen Zusatzstoffen und Metallchelaten,
und dass die beschichteten Düngemittelkörnchen aus der Beschichtungsvorrichtung herausgenommen werden.

## Revendications

1. Composition chimique à utiliser comme additif pour la composition d'un fertilisant,
**caractérisée en ce qu'**elle comprend 35 - 60 % en poids de sulfate de magnésium, 5 - 35 % en poids de sulfate de calcium, 10 - 35 % en poids d'un mélange contenant du carbonate de magnésium et du carbonate de calcium, jusqu'à 5 % en poids d'eau, soit libre, soit liée en eau cristallisée, le reste étant de l'oxyde de magnésium.

2. Composition chimique selon la revendication 1,
**caractérisée en ce qu'**elle comprend au moins 40 % en poids de sulfate de magnésium.

3. Composition chimique selon la revendication 1 ou la revendication 2,
**caractérisée en ce qu'**elle comprend au plus 55 % en poids de sulfate de magnésium.

4. Composition chimique selon la revendication 1,
**caractérisée en ce qu'**elle comprend 35 - 45 % en poids de sulfate de magnésium.

5. Composition chimique selon la revendication 1,
**caractérisée en ce qu'**elle comprend 40 - 45 % en poids de sulfate de magnésium.

6. Composition chimique selon la revendication 1,
**caractérisée en ce qu'**elle comprend 50 - 60 % en poids de sulfate de magnésium.

7. Composition chimique selon la revendication 1,
**caractérisée en ce qu'**elle comprend 50 - 55 % en poids de sulfate de magnésium.

8. Composition chimique selon la revendication 1,
**caractérisée en ce qu'**elle comprend au moins 30 % en poids de sulfate de calcium.

9. Composition chimique selon n'importe laquelle des revendications 1 à 8,
**caractérisée en ce qu'**elle contient au moins 15 % en poids de sulfate de calcium.

10. Composition chimique selon n'importe laquelle des revendications précédentes,
**caractérisée en ce qu'**elle contient entre 2 et 8 % en poids d'oxyde de magnésium.

11. Composition chimique selon la revendication 10,
**caractérisée en ce qu'**elle contient moins de 5 % en poids d'oxyde de magnésium.

12. Un procédé pour préparer une composition chimique contenant 35 - 60 % en poids de sulfate de magnésium, 5 - 35 % en poids de sulfate de calcium, 10 - 35 % en poids d'un mélange contenant du carbonate de magnésium et du carbonate de calcium, le reste étant de l'oxyde de magnésium,
**caractérisé en ce que** l'oxyde de magnésium, le carbonate de magnésium et/ou le carbonate de calcium sont mélangés avec de l'acide sulfurique dans un réacteur à lit fluidisé qui est entraîné avec de l'air, et la composition résultante est retirée du réacteur à lit fluidisé.

13. Un procédé selon la revendication 12,
**caractérisé en ce que** le carbonate de magnésium est dolomitique.

14. Un procédé selon la revendication 12 ou la revendication 13,
**caractérisé en ce que** l'oxyde de magnésium a une structure cristallisée définie.

15. Un procédé selon n'importe laquelle des revendications 12 à 14,
**caractérisé en ce que** l'air est préchauffé.

16. Un procédé selon n'importe laquelle des revendications 12 à 15,
**caractérisé en ce que** la température du lit est maintenue entre 110 et 200°C.

17. Un procédé selon la revendication 16,
**caractérisé en ce que** la température du lit est au moins de 120°C.

18. Un procédé selon la revendication 16 ou la revendication 17,
**caractérisé en ce que** la température du lit est au plus de 180°C.

19. Un procédé selon la revendication 18,
**caractérisé en ce** la température du lit est au plus de 150°C.

20. Un procédé selon n'importe laquelle des revendications 12 à 19,
**caractérisé en ce que** la taille des particules d'oxyde de magnésium et / ou de carbonate de magnésium est définie comme étant à 90% plus petite que 100 µm et à 40% plus petite que 30 µm.

21. Un procédé selon n'importe laquelle des revendications 12 à 20,
**caractérisé en ce que** le temps de réaction est de plus de 8 minutes.

22. Un procédé selon n'importe laquelle des revendications 12 à 21,
**caractérisé en ce que** le temps de réaction est de plus de 10 minutes.

23. Un procédé selon n'importe laquelle des revendications 12 à 22,
**caractérisé en ce qu'**un micronutriment est mélangé avec une composition chimique selon n'importe laquelle des revendications 1 à 11 dans le lit fluidisé.

24. Fertilisant
**caractérisé en ce qu'**avant ou pendant la granulation, le fertilisant a été mélangé avec une composition chimique selon n'importe laquelle des revendications 1 à 11.

25. Fertilisant selon la revendication 24,
**caractérisé en ce qu'**avant ou pendant la granulation, le fertilisant a été mélangé avec une composition chimique et d'autres substances chimiques.

26. Fertilisant selon la revendication 25,
**caractérisé en ce que** les autres substances chimiques sont des micronutriments.

27. Granulés de fertilisant,
**caractérisé en ce que** les granulés sont enrobés d'une composition chimique selon n'importe laquelle des revendications 1 à 11.

28. Granulés de fertilisant selon la revendication 27,
**caractérisé en ce que** l'enrobage est rempli d'autres compositions chimiques sélectionnées dans le groupe constitué de nutriments primaires et secondaires, de micronutriments, d'inhibiteurs de nitrification, de régulateurs à libération lente, de biostimulants, de pesticides, d'herbicides, de fongicides, d'organismes vivants, de vitamines, d'acides aminés, d'additifs d'origine marine et de chélates métalliques.

29. Un procédé pour préparer des granulés de fertilisant selon la revendication 27 ou la revendication 28,
**caractérisé en ce qu'**un mélange est envoyé dans un dispositif d'enrobage, ce mélange comprenant ;
1. des granulés de fertilisant ;
2. une composition chimique selon n'importe laquelle des revendications 1 à 11 ;
3. une quantité d'eau et, en option ;
4. des quantités de produits sélectionnés dans le groupe constitué de nutriments primaires et secondaires, de micronutriments, d'inhibiteurs de nitrification, de régulateurs à libération lente, de biostimulants, de pesticides, d'herbicides, de fongicides, d'organismes vivants, de vitamines, d'acides aminés, d'additifs d'origine marine et de chélates métalliques,
et que les granulés de fertilisant enrobés sont retirés du dispositif d'enrobage.
